Europäisches Patentamt

European Patent Office

Office européen des brevets

(11) Veröffentlichungsnummer: **0 073 982**
**A2**

# (12) EUROPÄISCHE PATENTANMELDUNG

(21) Anmeldenummer: **82107593.4**

(22) Anmeldetag: **19.08.82**

(51) Int. Cl.³: **F 16 H 19/00**

(30) Priorität: **09.09.81 DE 3135763**

(43) Veröffentlichungstag der Anmeldung:
**16.03.83 Patentblatt 83/11**

(84) Benannte Vertragsstaaten:
**AT DE FR GB SE**

(71) Anmelder: **Firma Aug. Winkhaus**
**August-Winkhaus-Strasse 78**
**D-4404 Telgte(DE)**

(72) Erfinder: **Beyer, Rudolf**
**Einener Strasse 67**
**D-4404 Telgte(DE)**

(72) Erfinder: **Pietschner, Wilfried**
**Am Fiskediek 31 a**
**D-4402 Greven 1(DE)**

(74) Vertreter: **Weickmann, Heinrich, Dipl.-Ing. et al,**
**Patentanwälte Dipl.-Ing. H. Weickmann Dipl.-Phys.Dr. K.**
**Fincke Dipl.-Ing. F.A. Weickmann Dipl.-Chem. B. Huber**
**Dr.-Ing. H. Liska Möhlstrasse 22**
**D-8000 München 86(DE)**

(54) Treibstangengetriebe.

(57) Bei einer Stulpschienen-Treibstangenbaueinheit mit einem an der Stulpschiene befestigten Lagerkäfig, einem stulpschienenparallelen Durchgangskanal durch den Lagerkäfig für die mit Transportlöchern ausgerüstete Schubstange und einem in Lagerstellen von Seitenwänden des Lagerkäfigs gelagerten Getrieberitzel wird vorgeschlagen, daß ein geschlitztes Füllstück mit beidseits des Schlitzes liegenden Stege in Zwischenräume zwischen dem Zahnkranz des Getrieberitzels und die Seitenwände des Lagerkäfigs eingeschoben wird, so daß das Getrieberitzel in Axialrichtung im wesentlichen spielfrei gesichert zwischen den Seitenwänden des Lagerkäfigs liegt und an den Enden des Füllstücks Verankerungsbohrungen für Griffrosetten-Befestigungsbolzen vorgesehen werden können.

FIG.1

Treibstangengetriebe
(Stichwort: "Getriebeadapter" WT 8123)

Die Erfindung betrifft ein mit einer Stulpschienen-Treibstangenbaueinheit vereinigtes Treibstangengetriebe zum Einbau in ein mit Treibstangennut in der Falzumfangsfläche, mit Getriebeausnehmung am Boden der Treibstangennut und mit in die Getriebeausnehmung einmündenden Griffwellen und Befestigungsdurchgängen versehenes Flügelrahmenprofil.

Solche Treibstangengetriebe sind bekannt

mit einem an der Stulpschiene befestigten oder befestigbaren Lagerkäfig;

mit einem stulpschienenparallelen Durchgangskanal durch den Lagerkäfig für die mit Transportorganen, insbesondere Transportlöchern, ausgerüstete Schubstange;

mit einem in Lagerstellen von Seitenwänden des Lagerkäfigs gelagerten Getrieberitzel, welches eine Lagernabe, einen Zahnkranz zum Eingriff in die Transportlöcher sowie Kupplungsmittel für eine Griffwelle, insbesondere einen unrunden Griffwellendurchsteckschacht für die Aufnahme einer durch den Griffwellendurchgang herangeführten Griffwelle, aufweist und

mit Verankerungsbohrungen für die Verankerung von durch die Befestigungsdurchgänge herangeführten Griffrosetten-Befestigungsbolzen,

wobei der Zahnkranz axialen Abstand von den Seitenwänden des Lagerkäfigs besitzt.

Der axiale Abstand des Zahnkranzes von den Seitenwänden des Lagerkäfigs ergibt sich dadurch, daß die Zähne des Zahnkranzes im Hinblick auf das zur Erhaltung des Zusammenhangs der Treibstange maximal zulässige Breitenmaß der Transportlöcher in Achsrichtung des Getrieberitzels schmäler sein müssen als die Treibstange selbst, jedenfalls dann, wenn man von einer einfachen Käfigform ausgeht, deren Seitenwände in ihrem gegenseitigen Abstand durchwegs durch die Breite der Treibstange im Längsbereich der Transportlöcher bestimmt ist. Dies führt dazu, daß man bei einfachen Ritzelformen mit einem scheibenförmigen Zahnkranz und einer einfachen zylindrischen Nabe, wie im Hinblick auf einfache und kostengünstige Fertigung erwünscht, zwischen den Seitenwänden des Käfigs und dem Zahnkranz Zwischenräume verbleiben. Diese Zwischenräume haben bisher nur störend gewirkt, weil sie dem Getrieberitzel ein unerwünschtes axiales Spiel gelassen haben, das auch durch den Eingriff der Zähne des Getrieberitzels in die Transportlöcher der Treibstange wegen der unvermeidlichen Toleranzen nicht vollständig beseitigt werden konnte.

Der Erfindung liegt die Aufgabe zugrunde, den Zwischenraum zwischen dem Zahnkranz zur Fixierung der die Verankerungsbohrungen tragenden Teile des Treibstangengetriebes heranzuziehen und gleichzeitig für eine verbesserte axiale Fixierung des Getrieberitzels gegenüber dem Käfig zu sorgen.

Zur Lösung dieser Aufgabe wird erfindungsgemäß vorgeschlagen, daß die Verankerungsbohrungen an den in Längsrichtung der Stulpschiene voneinander beabstandeten Endteilen eines Füllstücks angeordnet sind, dessen bogenförmig ausgebildetes Mittelteil durch einen den Zahnkranzdurchtritt gewährenden Schlitz in zwei bogenförmige Stege unterteilt ist, welche zwischen jeweils einer Seitenwand des Lagerkäfigs und dem Zahnkranz aufgenommen werden. Dieses Füllstück kann einstückig, vorzugsweise aus Kunststoff aber beispielsweise auch aus Druckguß, hergestellt sein. Durch die Ausnutzung des Zwischenraums für die Unterbringung dieser Stege wird ein bisher nutzlos gebliebener Raum in sinnvoller Weise ausgenützt, so daß damit das Problem der Erzielung einer insgesamt kleinen Baugröße entschärft wird. Überdies ergibt sich ein besonders einfacher Aufbau des Käfigs und des Getrieberitzels und eine einfache Montage des gesamten Getriebes und darüberhinaus der gesamten aus Getriebe und Stulpschienen-Treibstangenbaueinheit bestehenden Baugruppe. Das Füllstück sitzt, insbesondere wenn es aus Kunststoff hergestellt ist, reibschlüssig in den Zwischenräumen zwischen dem Getrieberitzel und den Seitenwänden des Lagerkäfigs, so daß keine besonderen Befestigungsmittel zwischen Füllstück und Lagerkäfig erforderlich sind. Die Reibung reicht jedenfalls aus, um das Füllstück an dem Getriebe vor dem Einbau unverlierbar festzuhalten. Nach dem Einbau ist der Zusammenhang ohnehin dadurch festgelegt, daß einerseits die Stulpschiene am Flügelrahmen durch Schrauben oder dergleichen fixiert wird und damit auch der an ihr befestigte Käfig und daß andererseits das Füllstück durch Anlage an dem Getriebe, durch Anlage in den für sie vorgesehenen Bereichen der Getriebeausnehmung und durch Verbindung mit den Griffrosetten-Befestigungsbolzen eindeutig und unverrückbar festgelegt ist.

Unvermeidliche Toleranzen zwischen Griffbefestigungsrosette und dem Getriebe müssen berücksichtigt werden. Dies kann bei der erfindungsgemäßen Lösung auf einfache Weise dadurch erreicht werden, daß die Endteile des Füllstücks mit den Verankerungsbohrungen in Stulpschienen-Längsrichtung relativ zueinander einer beschränkten Toleranzausgleichsbewegung fähig sind und ggf. mit Anfasungen zur erleichterten Einführung der Griffrosetten-Befestigungsbolzen versehen sind. Die Toleranz-Ausgleichsbewegung ergibt sich bei Fertigung des Füllstücks aus Kunststoff aus der dem Kunststoff innewohnenden Flexibilität und ggf. durch zusätzliche Schwächungsstellen zwischen den Endteilen. Auch bei Fertigung des Füllstücks aus anderem Werkstoff kann durch solche Schwächungsstellen die notwendige Toleranzausgleichsbeweglichkeit erzielt werden.

Wenn das Füllstück aus Kunststoff gefertigt ist, so ergibt sich auch die kostengünstige Möglichkeit, die Verankerungsbohrungen gewindelos für selbstschneidende Griffrosetten-Befestigungsschrauben auszubilden; diese Möglichkeit ist aber auch grundsätzlich bei anderer Werkstoffwahl für das Füllstück zu verwirklichen.

Wenn man davon ausgeht, daß die Getriebeausnehmung durchwegs konstante Breite in Achsrichtung des Getrieberitzels besitzt, wie auch immer diese Getriebeausnehmung hergestellt ist, so ist es im Hinblick auf eine gute Verankerung in dem Flügelrahmenprofil wünschenswert, daß die Stirnflächen der Endteile bündig liegen mit den Außenflächen der Seitenwände des Käfigs, deren Abstand der Breite der Getriebeausnehmung angepaßt ist. Dies kann dadurch erreicht werden, daß die außerhalb der Seitenwände des Lagerkäfigs gelegenen Endteile des Füllstücks in Achsrichtung gegenüber dem Mittelteil verdickt sind, derart, daß ihre Stirnflächen im wesentlichen bündig mit den Außenflächen der Seitenwände des Lagerkäfigs liegen.

Es ist bekannt, die Getriebeausnehmung teilweise durch die Treibstangennut und teilweise durch die Treibstangennut anschneidende, von der Raumsichtseite des Flügels her in das Profilschenkelmaterial eingeführte Bohrungen mit insgesamt drei Bohrern herzustellen, wobei der dem Getriebewellendurchgang bildende mittlere größere Bohrer mindestens auf den Ritzeldurchmesser vergrößert ist und die die Befestigungsdurchgänge bildenden kleineren seitlichen Bohrer entsprechend den Abmessungen der die Verankerungsbohrungen aufweisenden Getriebeteile bemessen sind. Dabei entstehen angrenzend an die Treibstangennut annähernd halbkreisförmige Kammern zwischen denen das Flügelmaterial in Form von Stegen stehen bleibt. Auch an diese besonders einfache Herstellung der Getriebeausnehmung kann das erfindungsgemäße Treibstangengetriebe angepaßt werden, indem zwischen dem Mittelteil und den Endteilen entsprechende Einbuchtungen in dem Füllstück für die Aufnahme dieser Stege vorgesehen sind.

Bei bekannten Ausführungsformen macht der Einbau des Getrieberitzels in den Getriebekäfig montagetechnisch, insbesondere bei einer automatisierten Montage erhebliche Schwierigkeiten. Diese Schwierigkeiten können weitestgehend beseitigt werden, wenn die Lagerstellen auf ihrem von der Stulpschiene abgewandten Umfangsbereich für das freie Einlegen der Lagernabe offen bleiben und die Lagernabe gegen Ausheben aus den Lagerstellen nur durch die Stege des Füllstücks gesichert wird. Man kann dann den Lagerkäfig praktisch fertig stellen, bevor das Getrieberitzel eingelegt wird, hierauf das Getrieberitzel auf einfachste Weise einlegen und schließlich das Getrieberitzel durch das Einsetzen des Füllstücks sichern. Es hat sich gezeigt, daß diese Lagerung ausreicht, weil in Richtung senkrecht zur Stulpschiene keine wesentlichen Lagerkräfte auftreten und weil die Stulpschiene einerseits und das Füllstück andererseits wie oben dargelegt, nach erfolgter Montage gegeneinander eindeutig und unverrückbar festgelegt sind.

Zu einem besonders einfachen Getriebe kommt man dann, wenn der Lagerkäfig von einem U-Blech gebildet ist, mit einem an der Stulpschiene, ggf. im Bereich einer Kröpfung derselben, befestigten U-Steg und von diesem U-Steg ausgehenden Seitenwänden. Sind die Lagerstellen bei einer solchen Ausführungsform geschlossen, so muß das Getrieberitzel vor dem Zusammenbiegen der Seitenwände in ihre endgültige Stellung eingelegt und mit der Nabe in die Lagerstellen eingefädelt werden, worauf dann das Füllstück eingesetzt wird. Schon bei dieser Ausführungsform ergeben sich erhebliche Vorteile gegenüber dem Stand der Technik. Wird überdies in Weiterbildung der Erfindung der Lagerkäfig mit offenen Lagerstellen ausgeführt, so kann er fertiggebogen und mit der Stulpschiene verbunden werden, bevor das Getrieberitzel eingesetzt und durch das Füllstück fixiert wird. In jedem Fall ist natürlich das Einlegen der Treibstange in den Treibstangendurchgangskanal vor dem Einsetzen des Getrieberitzels in den Lagerkäfig vorzunehmen.

Weiterer Stand der Technik ergibt sich aus den folgenden Druckschriften:

DE-GM 78 07 913,

DE-OS 23 44 971,

DE-OS 23 45 496 und

DE-OS 24 17 101.

Die beiliegenden Figuren erläutern die Erfindung anhand eines Ausführungsbeispiels. Es stellen dar:

Fig. 1 einen Schnitt nach Linie I-I der Fig. 2 durch einen verschlußseitigen Flügelrahmenschenkel mit eingebauter Stulpschienen-Treibstangeneinheit und daran befestigtem Treibstangengetriebe;

Fig. 2 einen Schnitt nach Linie II-II der Fig. 1;

Fig. 3 eine Draufsicht auf die Sichtseite des Flügelrahmenschenkels gemäß Fig. 1 und 2 mit dem Umriß der Griffrosette in Pfeilrichtung III der Fig. 2, diese Darstellung im Maßstab 1:2 verkleinert;

Fig. 4 einen Schnitt nach Linie IV-IV der Fig. 3;

Fig. 5 einen Schnitt nach Linie V-V der Fig. 3;

Fig. 6 eine Explosionsdarstellung der Stulpschienen-Treibstangenbaueinheit samt Teilen des Treibstangengetriebes und

Fig. 7 eine Draufsicht auf die Explosionsanordnung der Fig. 6 in Pfeilrichtung VII der Fig. 6; und

Fig. 8 eine Endansicht auf das Füllstück in Pfeilrichtung VIII der Fig. 6.

In den Figuren ist ein Flügelrahmen ganz allgemein mit 10 bezeichnet. Dieser Flügelrahmen weist eine gestufte Treibstangennut 12 auf mit einer äußeren Nutstufe 12a für eine Stulpschiene 14 und einer inneren Nutstufe 12b für die Aufnahme einer Treibstange 16. In den Boden 12c der Treibstangennut 12 sind halbzylindrische Kammern 12e und 12f gebildet, welche durch Bohrwerkzeuge von der Sichtseite 18 des Flügelrahmenprofils 10 her erzeugt sind.

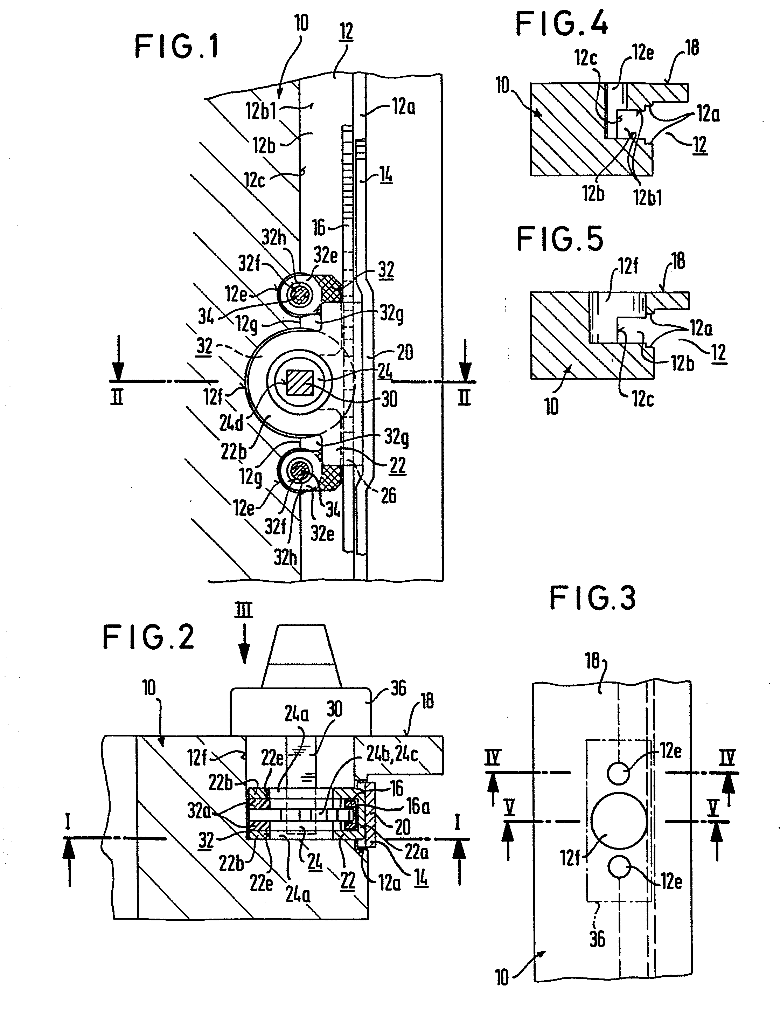

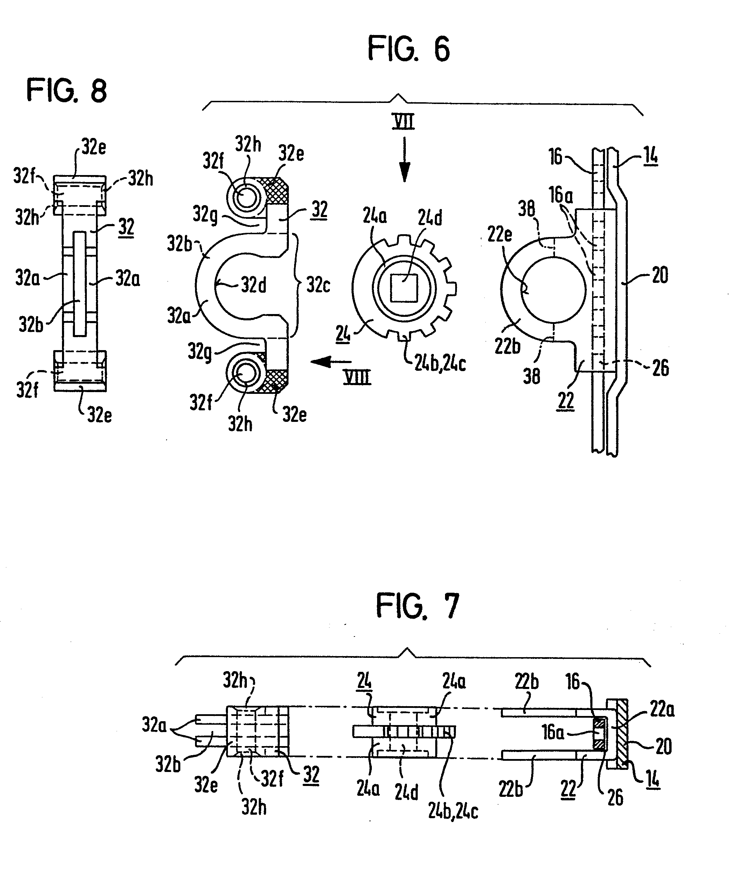

Die Stulpschiene 14 ist in einem Bereich 20, wie aus Fig. 1 und 6 ersichtlich, gekröpft. In diesem Bereich ist auf der Stulpschiene 14 ein U-förmiger Lagerkäfig 22 angepunktet. Der Lagerkäfig 22 besteht aus dem auf dem gekröpften Abschnitt 20 der Stulpschiene 14 aufgepunkteten Steg 22a und dem mit dem Steg einstückig zusammenhängenden Seitenwänden 22b. Der Lagerkäfig ist als Stanz- und Biegeteil hergestellt. Die Wandstärke des Stegs 22a ent-

spricht der Kröpfung im Abschnitt 20. In den Seitenwänden 22b des Lagerkäfigs 22 sind Lagerstellen 22e in Form von kreisrunden Öffnungen 22e vorgesehen. In dem Lagerkäfig 22 ist, wie insbesondere aus Fig. 6 und 7 zu ersehen, ein Getrieberitzel 24 gelagert. Das Getrieberitzel 24 weist, wie aus Fig.6 und 7 zu ersehen, eine Lagernabe 24a und einen Zahnkranz 24b mit einer Mehrzahl von Zähnen 24c auf. Wie aus Fig. 6 und 7 zu ersehen, stehen die Zähne 24c mit Transportlöchern 16a der Treibstange 16 in Eingriff. Die Treibstange 16 ist in einem Durchgangskanal 26 geführt, welcher, wie aus Fig. 7 ersichtlich, definiert ist durch den Steg 22a und die Seitenwände 22b des Lagerkäfigs 22 sowie das Getrieberitzel 24. Die Treibstange 16 kann in ihrem den Durchgangskanal 26 durchlaufenden Abschnitt gegenüber der übrigen Länge der Treibstange breitenvermindert sein. Das Getrieberitzel 24 weist weiter einen Durchsteckschacht 24d für eine quadratische Griffwelle 30 auf.

Wie aus Fig. 7 ersichtlich, ist die Breite des Zahnkranzes 24b geringer als der Abstand der Seitenwände 22b des Käfigs 22, so daß zwischen dem Zahnkranz 24b und den Seitenwänden 22b Zwischenräume gebildet werden. Diese Zwischenräume werden ausgefüllt von Stegen 32a eines Füllstücks 32, welches als Kunststofformteil hergestellt ist. Das Füllstück 32 weist zwischen den Stegen 32a einen Schlitz 32b auf, welcher seinerseits den Zahnkranz 24b des Ritzels 24 aufnimmt. Die durch die Stege 32a definierte Innenrundung 32d entspricht annähernd dem Außendurchmesser der Lagernabe 24a und liegt an dieser an. Die Stege 32a definieren einen Mittelteil 32c des Füllstücks 32. An diesem Mittelteil 32c schließen sich zwei Endteile 32e an, welche, wie aus Fig. 6 ersichtlich, Verankerungsbohrungen 32f aufweisen. Diese Verankerungsbohrungen 32f sind gewindelos ausgeführt und nehmen im eingebauten Zustand des Treibstangengetriebes gemäß Fig. 1 Griffrosetten-Befestigungsschrauben 34 auf, welche der Befestigung einer

Griffrosette 36 dienen und die Bohrungen 12e durchdringen. Wie auch aus Fig. 7 und 8 ersichtlich, sind die Endteile 32e des Füllstücks 32 gegenüber dem Mittelteil 32c verdickt, so daß sie bündig liegen mit den Außenflächen der Seitenwände 22b. Wie aus Fig. 6 ersichtlich, sind zwischen den Endteilen 32e und dem Mittelteil 32 c des Füllstücks 32 Einbuchtungen 32g gebildet, welche, wie aus Fig. 1 ersichtlich, die zwischen den halbkreisförmigen Kammern 12e und 12f stehengebliebenen Stege 12g aufnehmen. Die in Fig. 1 kreuzschraffierten Flächen stellen die Stirnflächen der Endteile 32e dar, welche außerhalb des Bereichs der Bohrungen 12e liegen und deshalb an den Seitenflächen 12b1 der Treibstangennut 12b zur Anlage kommen. Die Verankerungsbohrungen 32f sind wie aus Fig. 8 ersichtlich bei 32h angefast.

Der Zusammenbau der Stulpschienen-Treibstangenbaueinheit und des Treibstangengetriebes kann folgendermaßen vor sich gehen:

Auf die mit der Kröpfung 20 versehene Stulpschiene 14 wird der Käfig 22 mit seinem Steg 22a aufgepunktet, während die Seitenwände 22b noch voneinander abgespreizt sind. Nunmehr wird die Treibstange 16 eingebaut. Sodann wird das Getrieberitzel 24 mit seinen Zähnen 24c in Eingriff mit den Transportlöchern 16a der Treibstange 16 gebracht. Danach werden die Seitenwände 22b in die Parallelstellung gemäß Fig. 7 gebracht, wobei die Enden der Lagernabe 24a des Getrieberitzels 24 in die Lagerstellen 22e der Seitenwände 22b eingefädelt werden. Dann werden die Stege 32a in die Zwischenräume zwischen dem Zahnkranz 24b und die Seitenwände 22b eingeschoben, bis die Innenumfangsflächen 32d der Stege 32b an der Lagernabe 24a des Getrieberitzels 24 anliegen. Damit ist das Lagerritzel 24 zwischen den Seitenwänden 22b in axialer Richtung festgelegt und das Füllstück 32 ist reibschlüssig unverlierbar an dem Treibstangengetriebe festgehalten.

Diese Montage kann noch dadurch vereinfacht werden, daß die Seitenwände 22b, wie in Fig. 6 durch strichpunktierte Linien 38 angedeutet ist , abgeschnitten werden, so daß nur noch offene halbrunde Lagerstellen zur Verfügung stehen. Dann kann das Getrieberitzel 24 in seine Lagerstellen eingesetzt werden, nachdem die Seitenwände 22b bereits in ihre endgültige Stellung gebracht sind. Das Ritzel 24 wird dann einfach nach Aufsetzen des Füllstücks 32 durch die Stege 32a in den offenen halbrunden Lagerstellen gehalten.

Der Einbau der fertigen Stulpschienen-Treibstangeneinheit mit angebautem Treibstangengetriebe in den Flügelrahmenschenkel gemäß den Fig. 1 bis 5 erfolgt durch einfaches Einschieben, wobei der Mittelteil des Getriebes teils von der Treibstangennut 12b, teils von der halbkreisförmigen Kammer 12f aufgenommen wird, während die Endteile 32e des Füllstücks 32 ebenfalls in der Treibstangennut 12b und den in teilkreisförmigen Kammern 12e aufgenommen sind. Wichtig ist dabei, daß die kreuzschraffierten Stirnflächen der Endteile 32e an den Seitenflächen 12b1 der Treibstangennut 12b anliegen, so daß sich diese Endteile bei Anziehen der Griffrosetten-Befestigungsschrauben 34 gegen die Seitenflächen 12b1 abstützen können. Die Stulpschiene 14 wird durch nicht eingezeichnete Schrauben am Nutgrund 12c der Treibstangennut 12b befestigt. Die Umrisse der Endteile 32e des Füllstücks 32 sind den Umrissen der Bohrungen 12e angepaßt, so daß das Füllstück 32, obwohl die Griffrosetten-Befestigungsschrauben 34 keinen unmittelbaren Kontakt mit den Bohrungen 12e haben, unverrückbar an die Flügelrahmenschenkel 10 festgelegt ist.

Es sei aber an dieser Stelle noch bemerkt, daß es ohne weiteres auch denkbar ist, für die Aufnahme des gesamten Füllstücks eine zusammenhängende Kammer in den Nutgrund 12c einzufräsen und die Bohrungen 12e und 12f nur so groß zu halten, daß sie an den Durchmesser der Griffrosetten-Befestigungsschrauben 34 bzw. der Griffwelle 30 angepaßt sind. Die wesentlichen Vorteile der erfindungsgemäßen Lösung gehen bei einer solchen Ausführungsform nicht verloren. Die Ausbuchtungen 32g sind dann zur Aufnahme der Stege 12g nicht mehr erforderlich, dürften aber gleichwohl deshalb beibehalten werden, weil sie die Relativbeweglichkeit der Endteile 32e des Füllstücks 32 begünstigen. Diese Relativbeweglichkeit ist erwünscht im Hinblick auf die Anpassung des Füllstücks an die nicht eingezeichneten Bohrungen in der Griffrosette 36, welche von den Griffrosetten-Befestigungsschrauben 34 durchsetzt werden.

Es ist auch ein besonderer Vorteil der vorliegenden Erfindung, daß durch Austausch unterschiedlicher Füllstücke bei sonst unveränderter Getriebeform eine Anpassung an unterschiedliche Einbauverhältnisse und insbesondere an unterschiedliche Griffrosettenformen und Lochbilder möglich ist.

Schließlich ist auch noch darauf hinzuweisen, daß durch das Füllstück 32 die Führungsfunktion der Treibstange an der Stulpschiene verbesssert werden kann.

Patentansprüche

1. Mit einer Stulpschienen-Treibstangenbaueinheit vereinigtes Treibstangengetriebe zum Einbau in ein mit einer Treibstangennut in der Falzumfangsfläche, mit einer Getriebeausnehmung am Boden der Treibstangennut und mit in die Getriebeausnehmung mündenden Griffwellen und Befestigungsdurchgängen versehenes Flügelrahmenprofil, dieses Treibstangengetriebe ausgeführt mit

einem an der Stulpschiene befestigten oder befestigbaren Lagerkäfig,

einem stulpschienenparallelen Durchgangskanal durch den Lagerkäfig für die mit Transportorganen, insbesondere Transportlöchern, ausgerüstete Schubstange,

einem in Lagerstellen von Seitenwänden des Lagerkäfigs gelagerten Getrieberitzel, welches eine Lagernabe, einen Zahnkranz zum Eingriff in die Transportlöcher sowie Kupplungsmittel für eine Griffwelle, insbesondere einen unrunden Griffwellendurchsteckschacht, aufweist und

Verankerungsbohrungen für die Verankerung von durch die Befestigungsdurchgänge herangeführten Griffrosetten-Befestigungsbolzen,

wobei der Zahnkranz axialen Abstand von den Seitenwänden des Lagerkäfigs besitzt,

dadurch gekennzeichnet, daß die Verankerungsbohrungen (32f) an den in Längsrichtung der Stulpschiene (14) voneinander beabstandeten Endteilen (32e) eines Füllstücks (32) angeordnet sind, dessen bogenförmig ausgebildetes Mittelteil (32c) durch einen dem Zahnkranz (24b) Durchtritt gewährenden Schlitz (32b) in zwei bogenförmige Stege (32a) unterteilt ist, welche zwischen jeweils einer Seitenwand (22b) des Lagerkäfigs (22) und den Zahnkranz (24b) aufgenommen werden.

2. Treibstangengetriebe nach Anspruch 1, dadurch gekennzeichnet, daß das Füllstück (32) einstückig, vorzugsweise aus Kunststoff, hergestellt ist.

3. Treibstangengetriebe nach Anspruch 1 oder 2, dadurch gekennzeichnet, daß das Getrieberitzel (24) durch die Stege (32a) in axialer Richtung im wesentlichen spielfrei festgelegt ist.

4. Treibstangengetriebe nach einem der Ansprüche 1 bis 3, dadurch gekennzeichnet, daß die Endteile (32e) mit den Verankerungsbohrungen (32f) in Stulpschienenlängsrichtung relativ zueinander einer beschränkten Toleranzausgleichsbewegung fähig und ggf. mit Anfasungen (32h) zur Erleichterung des Einführens der Griffrosetten-Befestigungsbolzen (34) versehen sind.

5. Treibstangengetriebe nach einem der Ansprüche 1 bis 4, dadurch gekennzeichnet, daß die Verankerungsbohrungen (32f) gewindelos für selbstschneidende Griffrosetten-Befestigungsschrauben (34) ausgebildet sind.

6. Treibstangengetriebe nach einem der Ansprüche 1 bis 5, dadurch gekennzeichnet, daß die außerhalb der Seitenwände (22b) des Lagerkäfigs (22) gelegenen Endteile (32e) des Füllstücks (32) in Achsrichtung gegenüber dem Mittelteil (32c) verdickt sind derart, daß ihre Stirnflächen im wesentlichen bündig mit den Außenflächen der Seitenwände (22b) des Lagerkäfigs (22) liegen.

7. Treibstangengetriebe nach einem der Ansprüche 1 bis 6, dadurch gekennzeichnet, daß für den Fall der Stegbildung (bei 12g) zwischen der durch Vergrößerung des Griffwellendurchgangs (12f) auf Ritzeldurchmesser gebildeten Getriebeausnehmung und durch Vergrößerung der Befestigungsdurchgänge (12e) auf Endteildurchmesser gebildeten Endteilausnehmungen zwischen dem Mittelteil (32c) und den Endteilen (32e) entsprechende Einbuchtungen (32g) in dem Füllstück (32) für die Aufnahme dieser Stege (12g) vorgesehen sind.

8. Treibstangengetriebe nach einem der Ansprüche 1 bis 7, dadurch gekennzeichnet, daß die Lagerstellen (22e) auf ihrem von der Stulpschiene (14) abgewandten Umfangsbereich für das freie Enlegen der Lagernabe (24a) offen sind (bei 38) und die Lagernabe (24a) gegen Ausheben aus den Lagerstellen (22e) durch die Stege (32a) des Füllstücks (32) gesichert ist.

9. Treibstangengetriebe nach einem der Ansprüche 1 bis 8, dadurch gekennzeichnet, daß der Lagerkäfig (22) von einem U-Blech gebildet ist mit einem an der Stulpschiene (14), ggf. im Bereich einer Kröpfung (20), befestigten U-Steg (22a) und von diesem U-Steg (22a) ausgehenden Seitenwänden (22b).

10. Treibstangengetriebe nach einem der Ansprüche 1 - 9, dadurch gekennzeichnet, daß der Innendurchmesser des bogenförmig ausgebildeten Mittelteils (32c) annähernd dem Außendurchmesser der Lagernabe (24a) entspricht.

11. Treibstangengetriebe nach einem der Ansprüche 1 - 10, dadurch gekennzeichnet, daß zur Erzielung eines Aufschnappeffektes der Eingang zu dem Aufnahmeraum für die Lagernabe (24a) innerhalb des Mittelteils (32c) schmäler ist als der Durchmesser der Lagernabe (24a).

1/2

0073982

FIG.1

FIG.4

FIG.5

FIG.2

FIG.3

FIG. 6

FIG. 8

FIG. 7